# EUROPEAN PATENT APPLICATION

(11) **EP 3 196 266 A1**
(43) Date of publication of application: **26.07.2017**
(21) Application number: 15842820.1
(22) Date of filing: 19.05.2015
(51) Int. Cl.: C09J 123/00, B32B 15/085, C09J 11/06, C09J 163/00, H01M 2/02

(54) **LAMINATE ADHESIVE, STACK USING THE SAME, AND SECONDARY BATTERY**

(30) Priority: 17.09.2014 JP 2014188873
(71) Applicant: DIC Corporation, Tokyo 174-8520 (JP)
(72) Inventor: NAKAMURA, Hidemi, Tokyo 174-8520 (JP); MATSUO, Takatoshi, Tokyo 174-8520 (JP); KOUYAMA, Tatsuya, Tokyo 174-8520 (JP)
(74) Representative: TBK
(86) International application number: PCT/JP2015/064264
(87) International publication number: WO 2016/042837

(57) **Abstract**

It is an object to provide a novel laminating adhesive to thereby allow provision of a laminating adhesive composition for a laminate that provides good adhesion between a metal layer and a plastic layer, has satisfactory moisture barrier properties, heat resistance, insulation properties, durability, etc., also exhibits electrolyte resistance even after low-temperature curing, and does not undergo delamination over time. A laminate that uses the laminating adhesive composition and a secondary battery are also provided. The above object is achieved by a laminating adhesive containing a non-chlorine-based polyolefin resin (A), an epoxy compound (B), and an organic solvent (C) including a cyclic alkane compound as an essential ingredient and further including an ester-based solvent or an alcohol-based solvent. In the organic solvent (C), the ratio, in parts by mass, of the cyclic alkane compound to the solvent other than the cyclic alkane compound is within the range of 1/1 to 20/1.

## Description

### Technical Field

The present invention relates to a laminating adhesive for sealing an electrolyte used for a secondary battery, to a laminate using the same, and to a secondary battery.

### Background Art

Secondary batteries typified by lithium ion batteries have a structure in which positive and negative electrodes and an electrolytic solution etc. disposed therebetween are sealed. A laminate produced by laminating a plastic and a metal vapor-deposited layer or metal foil such as aluminum foil is used for a sealing bag used to seal lead wires for drawing electricity from the positive and negative electrodes.

This laminate is required to have the properties required of secondary batteries such as moisture barrier properties, sealing properties, puncture resistance, insulation properties, heat/cold resistance, and corrosion resistance. Particularly, it is difficult to obtain electrolyte resistance, i.e., resistance to dissolution in an electrolyte, by low-temperature curing.

For example, in a sealing bag proposed in PTL 1, a maleic acid-modified polyolefin resin is used for the innermost layer of a laminate, and a heat seal portion is formed of the same maleic acid-modified polyolefin resin to thereby improve sealing reliability. The maleic acid-modified polyolefin resin has good adhesion to metals and high heat sealing properties and is used commonly as an adhesive resin. When the maleic acid-modified polyolefin resin is used for a sealing film for the above-described batteries, the resin exhibits good adhesion immediately after lamination at high temperature. However, since the electrolyte resistance of the maleic acid-modified polyolefin resin is low, delamination occurs over time. Therefore, the maleic acid-modified polyolefin resin cannot be used for the sealing film.

PTL 2 describes a laminate for a battery electrolyte sealing film or for a battery electrode protective film. This laminate includes a metal layer, a surface-treated layer formed on a surface of the metal layer, and an adhesive resin layer formed on the surface-treated layer and made of a polyolefin modified with a carboxylic acid group or a derivative thereof.

PTL 3 describes an adhesive resin composition including (A) a polyolefin-based resin having at least one functional group selected from the group consisting of acid anhydride groups, a carboxyl group, and metal carboxylates and (B) an epoxidized vegetable oil having at least two epoxy groups and having a molecular weight of 3,000 or less. The amount of the component (B) used is 0.01 to 5 parts by weight with respect to 100 parts by weight of the component (A).

PTL 4 describes a resin composition for a secondary battery electrode binder. This resin composition contains an acid-modified polyolefin resin (A) and a polyurethane resin (B) and is characterized in that the amount of (B) is 0.5 to 100 parts by mass with respect to 100 parts by mass of (A).

### Citation List

### Patent Literature

PTL 1: Japanese Unexamined Patent Application Publication No. 9-283101
PTL 2: WO2007017043
PTL 3: Japanese Unexamined Patent Application Publication No. 8-193148
PTL 4: Japanese Unexamined Patent Application Publication No. 2010-277959

### Summary of Invention

### Technical Problem

At present, a laminating adhesive that solves the foregoing problems is not known in the related art, and also a laminating adhesive that meets the requirements of the present invention is not known.

Accordingly, an object of the present invention is to provide a novel laminating adhesive having good solvent stability and therefore improved in the ease of application. This allows provision of a laminating adhesive composition for a laminate that provides good adhesion between a metal layer and a plastic layer, has satisfactory moisture barrier properties, heat resistance, insulation properties, durability, etc., exhibits electrolyte resistance even after low-temperature curing, and does not undergo delamination over time. A laminate that uses the laminating adhesive composition and a secondary battery are also provided. Solution to Problem

To achieve the above object, the present inventors have conducted studies. As a result of the studies, the object has been achieved by a laminating adhesive containing a non-chlorine-based polyolefin resin (A), an epoxy compound (B), and an organic solvent (C) including a cyclic alkane compound as an essential ingredient and further including an ester-based solvent or an alcohol-based solvent. In the organic solvent (C), the ratio, in parts by mass, of the cyclic alkane compound to the solvent other than the cyclic alkane compound is within the range of 1/1 to 20/1. Advantageous Effects of Invention

The present invention can provide a laminating adhesive composition for a laminate that provides good adhesion between a metal layer and a plastic layer, has satisfactory moisture barrier properties, heat resistance, insulation properties, durability, etc., also exhibits electrolyte resistance even after low-temperature curing, and does not undergo delamination over time. The present invention can also provide a laminate that uses the laminating adhesive composition and a secondary battery.

### Description of Embodiments

The present invention includes the following items.
1. A laminating adhesive comprising: a non-chlorine-based polyolefin resin (A); an epoxy compound (B); and an organic solvent (C) including a cyclic alkane compound as an essential ingredient and further including an ester-based solvent or an alcohol-based solvent, wherein
   in the organic solvent (C), the ratio, in parts by mass, of the cyclic alkane compound to the solvent other than the cyclic alkane compound is within the range of 1/1 to 20/1.
2. The laminating adhesive according to 1, wherein the cyclic alkane compound is methylcyclohexane, the ester-based solvent is ethyl acetate, and the alcohol-based solvent is an aliphatic alcohol having 1 to 4 carbon atoms.
3. The laminating adhesive according to 1 or 2, wherein the non-chlorine-based polyolefin resin (A) includes a modified polyolefin resin having an acid value of 1 to 200 mg KOH/g or a modified polyolefin resin having a hydroxyl value of 1 to 200 mg KOH/g.
4. The laminating adhesive according to any of 1 to 3, wherein the epoxy compound (B) includes, as an essential ingredient, an epoxy compound having at least two epoxy groups per molecule and at least one hydroxyl group per molecule and having a weight average molecular weight of 3,000 or less.
5. The laminating adhesive according to any of 1 to 4, wherein the amount of the epoxy compound (B) used is 0.01 to 30 parts by mass with respect to 100 parts by mass of the non-chlorine-based polyolefin resin (A).
6. The laminating adhesive according to any of 1 to 5, further comprising a thermoplastic elastomer, a tackifier, a catalyst, a phosphoric acid compound, a melamine resin, a silane coupling agent, or a reactive elastomer.
7. A laminate in which the laminating adhesive according to any of 1 to 6 is used between a metal layer and a polyolefin resin layer.
8. A secondary battery in which the laminate according to 7 is used as an electrolyte solution sealing film or an electrode protective film.

### (Non-chlorine-based polyolefin resin (A))

The non-chlorine-based polyolefin resin (A) used in the present invention may be any of the following polyolefin resins, so long as it is a non-chlorine-based polyolefin resin containing no chlorine atom.

Examples of such polyolefin resins include: homopolymers and copolymers of olefins having 2 to 8 carbon atoms; and copolymers of olefins having 2 to 8 carbon atoms with other monomers. Specific examples include: polyethylenes such as high-density polyethylene (HDPE), low-density polyethylene (LDPE), and linear low density polyethylene resins; polypropylene; polyisobutylene; poly(1-butene); poly 4-methylpentene; polyvinylcyclohexane; polystyrene; poly(p-methylstyrene); poly(**α**-methylstyrene); **α**-olefin copolymers such as ethylene·propylene block copolymers, ethylene·propylene random copolymers, ethylene·butene-1 copolymers, ethylene·4-methyl-1-pentene copolymers, and ethylene·hexene copolymers; ethylene·vinyl acetate copolymers; ethylene·acrylic acid copolymers; ethylene·methyl methacrylate copolymers; ethylene·vinyl acetate·methyl methacrylate copolymers; and ionomer resins.

The non-chlorine-based polyolefin resin (A) in the present invention may include a modified polyolefin resin having an acid value of 1 to 200 mg KOH/g or a modified polyolefin resin having a hydroxyl value of 1 to 200 mg KOH/g.

The non-chlorine-based polyolefin resin (A) used in the present invention can be any of the various types described above. Particularly, modified polyolefin resins prepared by introducing functional groups (such as carboxyl groups and hydroxyl groups) into polyolefin resins are more preferred. Such modified polyolefin resins are more preferably a modified polyolefin resin having an acid value of 1 to 200 mg KOH/g (hereinafter referred to as an acid-modified polyolefin resin) and/or a modified polyolefin resin having a hydroxyl value of 1 to 200 mg KOH/g (hereinafter referred to as a hydroxyl group-modified polyolefin resin) because adhesion to a metal layer is further improved and good electrolyte resistance is achieved.

The acid-modified polyolefin resin is a polyolefin resin having carboxyl groups or carboxylic anhydride groups in its molecule and is synthesized by modifying a polyolefin with an unsaturated carboxylic acid or a derivative thereof. The method of modification used may be graft modification or copolymerization.

The acid-modified polyolefin resin is a graft-modified polyolefin prepared by graft-modifying or copolymerizing an unmodified polyolefin resin with at least one polymerizable ethylenically unsaturated carboxylic acid or a derivative thereof. Examples of the unmodified polyolefin resin include the polyolefin resins described above. Of these, homopolymers of propylene, copolymers of propylene with **α-**olefins, homopolymers of ethylene, and copolymers of ethylene with **α**-olefins are preferred. One type of acid-modified polyolefin resin may be used alone, or a combination of two or more types may be used.

Examples of the ethylenically unsaturated carboxylic acid and derivatives thereof used for graft modification or copolymerization of the unmodified polyolefin resin include acrylic acid, methacrylic acid, maleic acid, itaconic acid, citraconic acid, mesaconic acid, maleic anhydride, 4-methylcyclohex-4-ene-1,2-dicarboxylic anhydride, bicyclo[2.2.2]oct-5-ene-2,3-dicarboxylic anhydride, 1,2,3,4,5,8,9,10-octahydronaphthalene-2,3-dicarboxylic anhydride, 2-octa-1,3-diketospiro[4.4]non-7-ene, bicyclo[2.2.1]hept-5-ene-2,3-dicarboxylic anhydride, maleopimaric acid, tetrahydrophthalic anhydride, methyl-bicyclo[2.2.1]hept-5-ene-2,3-dicarboxylic anhydride, methyl-norbornene-5-ene-2,3-dicarboxylic anhydride, and norborn-5-ene-2,3-dicarboxylic anhydride. Preferably, maleic anhydride is used. These may be used alone or in combination of two or more.

Various methods can be used to graft a graft monomer selected from the ethylenically unsaturated carboxylic acids and derivatives thereof onto the unmodified polyolefin resin. Examples of such methods include: a method including melting the polyolefin resin and then adding the graft monomer to the molten polyolefin resin to allow a graft reaction to proceed; a method including dissolving the polyolefin resin in a solvent to form a solution and then adding the graft monomer to the solution to allow the graft reaction to proceed; and a method including mixing the polyolefin resin dissolved in an organic solvent with the unsaturated carboxylic acid etc. and heating the mixture at a temperature equal to or higher than the softening point or melting point of the polyolefin resin to perform radical polymerization and a hydrogen abstraction reaction simultaneously in a molten state. In any case, it is preferable that, in order to graft-copolymerize the graft monomer efficiently, the graft reaction is performed in the presence of a radical initiator. Generally, the graft reaction is performed under the condition of 60 to 350°C. The ratio of the radical initiator used with respect to 100 parts by weight of the unmodified polyolefin resin is generally in the range of 0.001 to 1 part by weight.

In the adhesive of the present invention, the radical initiator can be used. Preferred examples of the initiator include, but not limited to, imidazole-based radical initiators.

Examples of the radical initiator include CUREZOL (an imidazole-based initiator), triphenylphosphine, 1,8-diazabicyclo(5.4.0)undecene-7(DBU)-phenol salt, and DBU-octylate.

Examples of the acid-modified polyolefin resin include maleic anhydride-modified polypropylenes, ethylene-(meth)acrylic acid copolymers, ethylene-acrylate-maleic anhydride terpolymers, and ethylene-methacrylate-maleic anhydride terpolymers. Specific examples include commercial products such as "MODIC" manufactured by Mitsubishi Chemical Corporation, "ADMER" and "UNISTOLE" manufactured by Mitsui Chemicals, Inc., "TOYO-TAC" manufactured by TOYOBO Co., Ltd., "YOUMEX" manufactured by Sanyo Chemical Industries, Ltd., "REXPEARL EAA" and "REXPEARL ET" manufactured by Japan Polyethylene Corporation, "PRIMACOR" manufactured by The Dow Chemical Company, "NUCREL" manufactured by DUPONT-MITSUI POLYCHEMICALS Co., Ltd., and "BONDINE" manufactured by ARKEMA.

The hydroxyl group-modified polyolefin resin is a polyolefin resin having hydroxyl groups in its molecule and is synthesized by graft-modifying or copolymerizing a polyolefin with a hydroxyl group-containing (meth)acrylate described later or a hydroxyl group-containing vinyl ether described later. The unmodified polyolefin resin and the modification method are the same as those for the acid-modified polyolefin resin.

Examples of the hydroxyl group-containing (meth)acrylate include hydroxyethyl (meth)acrylate, hydroxypropyl (meth)acrylate, glycerol (meth)acrylate, lactone-modified hydroxyethyl (meth)acrylate, polyethylene glycol (meth)acrylate, and polypropylene glycol (meth)acrylate. Examples of the hydroxyl group-containing vinyl ether include 2-hydroxyethyl vinyl ether, diethylene glycol monovinyl ether, and 4-hydroxybutyl vinyl ether.

In the adhesive of the present invention, the radical initiator can be used. Preferred examples of the initiator include, but not limited to, imidazole-based radical initiators.

Examples of the radical initiator include CUREZOL (an imidazole-based initiator), triphenylphosphine, 1,8-diazabicyclo(5,4,0)undecene-7(DBU)-phenol salt, and DBU-octylate.

### (Epoxy compound (B))

Examples of the epoxy compound(B) in the present invention include epoxy resins prepared from diglycidyl ethers of polyols such as ethylene glycol, propylene glycol, hexanediol, neopentyl glycol, trimethylolethane, trimethylolpropane, pentaerythritol, glycerin, diglycerin, sorbitol, spiroglycol, and hydrogenated bisphenol A.

Other examples of the epoxy compound(B) include: aromatic epoxy resins such as epoxy resins prepared from diglycidyl ethers of bisphenol A, bisphenol F, bisphenol S, and bisphenol AD and novolac-type epoxy resins that are glycidyl ethers of phenol novolac resins and cresol novolac resins; and epoxy resins prepared from diglycidyl ethers of polyols such as ethylene oxide and propylene oxide adducts of aromatic polyhydroxy compounds.

Still other examples include epoxy resins prepared from polyglycidyl ethers of polyether polyols such as polyethylene glycol, polypropylene glycol, and poly tetramethylene glycol; and cyclic aliphatic-type polyepoxy resins prepared from bis(3,4-epoxycyclohexylmethyl)adipate, 3,4-epoxycyclohexylmethyl-3',4'-epoxycyclohexyl carboxylate, etc.

Still other examples include: epoxy resins prepared from polyglycidyl esters of polycarboxylic acids such as propanetricarboxylic acid, butanetetracarboxylic acid, adipic acid, phthalic acid, terephthalic acid, and trimellitic acid; and bisepoxy resins prepared from hydrocarbon dienes such as butadiene, hexadiene, octadiene, dodecadiene, cyclooctadiene, **α**-pinene, and vinylcyclohexene.

Still other examples include: epoxy resins prepared from diene polymers such as polybutadiene and polyisoprene; epoxy resins prepared from glycidylamines such as tetraglycidyl diaminodiphenylmethane, tetraglycidyl bisaminomethylcyclohexane, diglycidylaniline, and tetraglycidyl m-xylylenediamine; and epoxy resins containing heterocycles such as triazine and hydantoin.

Of these, aromatic epoxy resins such as bisphenol A-type epoxy resins are preferably used because good adhesion and corrosion resistance are obtained.

Specific examples of the bisphenol A-type epoxy resin include "EPICLON 850, 860, 1050, 1055, and 2055" manufactured by DIC Corporation and "jER828, 834, 1001, 1002, 1004, and 1007" manufactured by Mitsubishi Chemical Corporation.

An epoxy resin containing as an essential ingredient an epoxy compound having at least two epoxy groups per molecule and at least one hydroxyl group per molecule and having a weight average molecular weight of 3,000 or less may be used.

Preferably, the amount of the epoxy compound (B) used is 0.01 to 30 parts by mass with respect to 100 parts by mass of the polyolefin resin (A).

An amount less than 0.01 parts by mass is not preferred because the adhesion to a substrate becomes low.

An amount more than 30 parts by mass is not preferred because the cohesion of a coating becomes low.

The laminating adhesive of the present invention is characterized by further comprising an organic solvent (C) containing a cyclic alkane compound as an essential ingredient and further containing an ester-based solvent or an alcohol-based solvent.

Examples of the cyclic alkane compound used in the present invention include methylcyclohexane.

No particular limitation is imposed on the ester-based solvent, so long as it is an organic solvent having an ester group and allowing the effects of the invention to be achieved. Examples of the ester-based solvent include ethyl acetate and butyl acetate.

No particular limitation is imposed on the alcohol-based solvent, so long as it is an organic solvent having an alcohol group and allowing the effects of the invention to be achieved. Preferable examples of the alcohol-based solvent include aliphatic alcohols having 1 to 4 carbon atoms.

The laminating adhesive of the present invention comprises the organic solvent (C) containing the cyclic alkane compound as an essential ingredient and further containing the ester-based solvent or the alcohol-based solvent and is characterized in that the ratio, in parts by mass, of the cyclic alkane compound to the solvent other than the cyclic alkane compound is within the range of 1/1 to 20/1.

When the laminating adhesive contains the organic solvent (C) having the composition described above, solution stability is improved, and the ease of application is improved. An improvement in electrolyte resistance, which is the object of the present invention, can thereby be achieved.

This effect is clear from Examples and Comparative Examples described later.

When these organic solvents are contained, dry lamination can be performed, and adhesion to a metal layer that is insufficient with conventional adhesives can be significantly improved even when aging is performed at a temperature lower than that used for the conventional adhesives, so that adhesion performance can be improved.

With an adhesive having a composition that is outside the scope described above, the object of the present invention cannot be achieved because the adhesive gelates.

### (Additional additives)

In the present invention, a well-known and commonly used additional additive such as a thermoplastic elastomer, a tackifier, a catalyst, a phosphoric acid compound, a melamine resin, a silane coupling agent, or a reactive elastomer may be used. The amount of each of these additives used is appropriately adjusted such that the function of the adhesive of the present invention is not impaired.

### (Laminate)

The laminate of the present invention is obtained by laminating a metal layer such as aluminum foil and one or a plurality of plastic layers such as polyolefin sheets, e.g., polyethylene or polypropylene sheets, or polyester layers, e.g., polyethylene terephthalate layers, using a laminating adhesive composition of the present invention.

The laminating adhesive composition of the present invention may be dissolved/dispersed in an appropriate solvent or dispersant such as an ester-based solvent, a ketone-based solvent, an aromatic hydrocarbon, an aliphatic hydrocarbon, or an alicyclic hydrocarbon in any ratio, applied to the metal foil using a known coating method such as a roll coating method, a gravure coating method, or a bar coating method, and then dried to form an adhesive layer.

The dry coating weight of the laminating adhesive composition of the present invention is preferably within the range of 0.5 to 30.0 g/m². If the dry coating weight is less than 0.5 g/m², coating continuity and uniformity are unsatisfactory. If the dry coating weight exceeds 30.0 g/m², the ease of solvent removal after application is impaired, and workability significantly deteriorates. In addition, the problem of residual solvent occurs.

After the laminating adhesive composition of the present invention is applied to one side of the metal foil, a plastic layer is placed on the applied laminating adhesive composition and laminated by dry lamination, whereby the laminate of the present invention is obtained. Preferably, the temperature of a laminating roller is room temperature to about 120°C, and its pressure is about 3 to about 100 kg/cm².

Preferably, the laminate of the present invention is aged after production. The aging conditions are room temperature to 100°C for 12 to 240 hours, and adhesion strength is achieved during aging.

### (Secondary battery)

The laminate of the present invention can be used for electrolyte solution sealing films and electrode protective films of primary and secondary batteries. In these cases, the laminate is used such that the plastic layer is in contact with a polar organic solvent and/or a salt etc. Particularly, the laminate can be preferably used as a secondary battery electrolyte solution sealing film or a secondary battery electrode protective film of, particularly, a non-aqueous electrolyte battery, a solid-state battery, etc. with the plastic layer in contact with a non-aqueous electrolyte containing a polar organic solvent and a salt. In this case, by folding the laminate with the plastic layer inward and subjecting the laminate to heat sealing, the laminate can be used as a battery sealing bag. The adhesive used in the present invention is excellent in heat sealing properties and can prevent leakage of the non-aqueous electrolyte, so that the battery can be used for a long time.

Examples of the polar organic solvent include aprotic polar solvents such as alkyl carbonates, esters, and ketones. Specific examples include ethylene carbonate, propylene carbonate, butylene carbonate, dimethyl carbonate, ethyl methyl carbonate, diethyl carbonate, **γ**-butyrolactone, 1,2-dimethoxyethane, tetrahydrofuran, 2-methyltetrahydrofuran, 1,3-dioxolane, 4-methyl-1,3-dioxolane, methyl formate, 4-methyl-1,3-dioxomethyl formate, methyl acetate, and methyl propionate. Examples of the salt include alkali metal salts such as lithium salts, sodium salts, and potassium salts. Lithium salts such as LiPF₆, LiBF₄, and Li-imide are generally used for batteries.

The non-aqueous electrolyte is prepared by dissolving 0.5 to 3 mmol of one of the alkali metal salts in an aprotic polar organic solvent such as a cyclic carbonate, a chain carbonate, or a mixture thereof.

Even when the laminate of the present invention is used in contact with the polar solvent and/or the salt, particularly with a mixture thereof, i.e., the non-aqueous electrolyte, delamination of the metal layer, the adhesive layer, and the plastic layer does not occur, so that the laminate can be used for a long time.

The battery of the present invention is a battery including a battery electrolyte solution sealing film formed from the laminate or a battery electrode protective film formed from the laminate. In the battery of the present invention, no delamination occurs in the film, and leakage of the non-aqueous electrolyte can be prevented, so that the battery can be stably used for a long time.

As described above, the laminate of the present invention provides good adhesion between a metal layer and a plastic layer, has high resistance to a polar organic solvent or a salt, and does not undergo delamination even when the laminate is in contact with a non-aqueous electrolyte etc. Therefore, a battery in which the above-described laminate is used as a battery electrolyte solution sealing film or as a battery electrode protective film and a secondary battery in which the laminate is used as a secondary battery electrolyte solution sealing film or as a secondary battery electrode protective film can be stably used for a long time. Examples of the secondary battery include, but not limited to, flexible package secondary batteries.

### Examples

The present invention will next be described by way of Examples. The term "parts" represents parts by mass.

### (Example 1)

50 Parts of modified polyolefin resin GMP7550E (manufactured by LOTTE CHEMICAL CORPORATION), 50 parts of AUROREN 350S, 0.05 parts of CUREZOL 2E4MZ, 6.0 parts of DENACOL EX-850L, 320 parts of methylcyclohexane, 40 parts of ethyl acetate, and 40 parts of isopropyl alcohol (IPA) were mixed and stirred well. The mixture was applied in an amount of 5 gm² (dry) to aluminum foil using a bar coater and dried at 80°C for one minute, and the resultant aluminum foil was laminated to a CPP film at 100°C to produce a coated product.

After the coated product was aged at 60°C for 5 days, an initial adhesion strength was measured.

Ingredients of other adhesives were mixed as shown in Table 1, and these adhesives were produced as in Example 1. Laminates were produced using the same production method as that for the laminate 1.

The adhesion performance and electrolyte resistance of each of the laminates obtained in the Examples were evaluated, and the results are shown in Table 1. The conditions of each performance test are as follows.

### (Measurement of initial adhesion strength)

A cut specimen with a width of 15 mm was subjected to a test using TENSILON manufactured by A&D Company, Limited to measure a 180° peel strength.

### (Electrolyte resistance)

Each laminate was immersed in an electrolyte "ethylene carbonate : ethyl methyl carbonate : dimethyl carbonate = 1 : 1 : 1 (wt%) + LiPF₆: 1 mol + vinylene carbonate: 1 wt%" at 80°C for 7 days. The laminate was evaluated as follows using retention of adhesion strength before and after immersion.

Good: 80% or more, Fair: 80 to 70%, Poor: 70% or less

In Comparative Examples, ingredients were mixed as shown in Table 2, and laminates were produced as in the Examples. The laminates were used to evaluate their adhesion strength and electrolyte resistance.

The results are shown in Table 2.

**[Table 1]**

| | Example 1 | Example 2 | Example 3 | Example 4 | Example 5 | Example 6 | Example 7 | Example 8 |
|---|---|---|---|---|---|---|---|---|
| GMP7550E | 90 | 100 | 75 | 80 | 75 | 100 | 75 | 100 |
| AUROREN 350S | 10 | | 25 | 20 | 25 | | 25 | |
| CUREZOL2E4MZ | 0.05 | | 0.05 | | 0.05 | | | 0.05 |
| Triphenylphosphine | | 0.1 | | 0.1 | | 0.1 | 0.1 | 0.05 |
| Methylcyclohexane | 320 | 360 | 320 | 360 | 320 | 360 | 400 | 450 |
| Ethyl acetate | 40 | 30 | 70 | 35 | 70 | 35 | | |
| Isopropyl alcohol | 40 | 20 | 10 | | | 5 | 20 | 450 |
| Methanol | | | | 5 | | | | |
| n-Butanol | | 20 | | | 10 | | | |
| Cyclic alkane / other solvents | 4/1 | 5.1/1 | 4/1 | 8/1 | 4/1 | 9/1 | 20/1 | 1/1 |
| Solution stability | Good | Good | Good | Good | Good | Good | Good | Good |
| DENACOL EX-850L | 6 | 3 | 2 | 3 | 3 | 1.5 | 1 | 1 |
| EPICLON 860 | | 2 | 2 | | 1 | 1.5 | 0.5 | 1 |
| Initial adhesion strength (180°N/15mm) | 11.1 | 9.8 | 11.2 | 13.0 | 11.1 | 9.8 | 11.2 | 13.0 |
| Electrolyte resistance | Good | Good | Good | Good | Good | Good | Good | Good |

- GMP7550E (manufactured by LOTTE CHEMICAL CORPORATION) maleic acid-modified polyolefin resin
   Nonvolatile component: 100%
- AUROREN 350S (manufactured by Nippon Paper Industries Co., Ltd.) maleic anhydride-modified polyolefin resin
   Nonvolatile component: 100%
- CUREZOL 2E4MZ (manufactured by SHIKOKU CHEMICALS CORPORATION) imidazole, nonvolatile component: 100%
- DENACOL EX-850L (manufactured by Nagase ChemteX Corporation) aliphatic epoxy resin
   Epoxy equivalent: 145, nonvolatile component: 100%
- EPICLON 860 (manufactured by DIC Corporation) bisphenol A-type epoxy resin, epoxy equivalent: 240, nonvolatile component: 100%

**[Table 2]**

| | Comparative Example 1 | Comparative Example 2 | Comparative Example 3 | Comparative Example 4 | Comparative Example 5 |
|---|---|---|---|---|---|
| GMP7550E | 100 | 25 | 50 | | 100 |
| AUROREN 350S | | 75 | 50 | 100 | |
| CUREZOL2E4MZ | 0.05 | | 0.1 | | |
| Triphenylphosphine | | 0.2 | | 0.3 | 0.1 |
| Methylcyclohexane | | | | | 133 |
| IPA | | | | | 133 |
| Toluene | 320 | 810 | 320 | 360 | |
| MEK | 80 | | 40 | 40 | |
| Ethyl acetate | | 90 | 40 | | 133 |
| Cyclic alkane / other solvents | 0 | 0 | 0 | 0 | 1/2 |
| Solution stability | Poor | Poor | Poor | Poor | Poor |
| DENACOL EX-850L | 2.2 | 5 | 6 | 2 | 8 |
| EPICLON 860 | | 5 | 2 | 2 | |
| Initial adhesion strength (180°N/15mm) | 8.5 | 14.2 | 10.2 | 6.9 | 11.6 |
| Electrolyte resistance | Poor | Poor | Poor | Poor | Poor |

- GMP7550E (manufactured by LOTTE CHEMICAL CORPORATION) maleic acid-modified polyolefin resin
   Nonvolatile component: 100%
- AUROREN 350S (manufactured by Nippon Paper Industries Co., Ltd.) maleic anhydride-modified polyolefin resin
   Nonvolatile component: 100%
- CUREZOL 2E4MZ (manufactured by SHIKOKU CHEMICALS CORPORATION) imidazole
   Nonvolatile component: 100%
- DENACOL EX-850L (manufactured by Nagase ChemteX Corporation) aliphatic epoxy resin
   Epoxy equivalent: 145, nonvolatile component: 100%
- EPICLON 860 (manufactured by DIC Corporation) bisphenol A-type epoxy resin
   Epoxy equivalent: 240, nonvolatile component: 100%

As is clear from the above results, the object of the present invention can be achieved by a laminating adhesive containing organic solvents with the composition specified in the present invention.

### Industrial Applicability

The laminating adhesive of the present invention provides good adhesion between a metal layer and a plastic layer, has satisfactory moisture barrier properties, heat resistance, insulation properties, durability, etc., also exhibits electrolyte resistance even after low-temperature curing, and does not undergo delamination over time. Therefore, the laminating adhesive can be used for laminates of secondary batteries.

## Claims

1. A laminating adhesive comprising: a non-chlorine-based polyolefin resin (A); an epoxy compound (B); and an organic solvent (C) including a cyclic alkane compound as an essential ingredient and further including an ester-based solvent or an alcohol-based solvent; wherein
in the organic solvent (C), the ratio, in parts by mass, of the cyclic alkane compound to the solvent other than the cyclic alkane compound is within the range of 1/1 to 20/1.

2. The laminating adhesive according to claim 1, wherein the cyclic alkane compound is methylcyclohexane, the ester-based solvent is ethyl acetate, and the alcohol-based solvent is an aliphatic alcohol having 1 to 4 carbon atoms.

3. The laminating adhesive according to claim 1 or 2, wherein the non-chlorine-based polyolefin resin (A) includes a modified polyolefin resin having an acid value of 1 to 200 mg KOH/g or a modified polyolefin resin having a hydroxyl value of 1 to 200 mg KOH/g.

4. The laminating adhesive according to any of claims 1 to 3, wherein the epoxy compound (B) includes, as an essential ingredient, an epoxy compound having at least two epoxy groups per molecule and at least one hydroxyl group per molecule and having a weight average molecular weight of 3,000 or less.

5. The laminating adhesive according to any of claims 1 to 4, wherein the amount of the epoxy compound (B) used is 0.01 to 30 parts by mass with respect to 100 parts by mass of the non-chlorine-based polyolefin resin (A).

6. The laminating adhesive according to any of claims 1 to 5, further comprising a thermoplastic elastomer, a tackifier, a catalyst, a phosphoric acid compound, a melamine resin, a silane coupling agent, or a reactive elastomer.

7. A laminate in which the laminating adhesive according to any of claims 1 to 6 is used between a metal layer and a polyolefin resin layer.

8. A secondary battery in which the laminate according to claim 7 is used as an electrolyte solution sealing film or an electrode protective film.
